Europäisches Patentamt

(19) European Patent Office

Office européen des brevets

(11) Veröffentlichungsnummer: **0 209 823**
**B1**

(12) **EUROPÄISCHE PATENTSCHRIFT**

(45) Veröffentlichungstag der Patentschrift: 03.10.90

(21) Anmeldenummer: 86109600.6

(22) Anmeldetag: 14.07.86

(51) Int. Cl.⁵: **C 08 G 18/48, C 09 D 175/04**

(54) **Verwendung von Ether- und Estergruppen aufweisenden Polyhydroxylverbindungen als Polyolkomponente in Polyurethan-Beschichtungsmitteln oder -Vergussmassen.**

(30) Priorität: 26.07.85 DE 3526790

(43) Veröffentlichungstag der Anmeldung:
28.01.87 Patentblatt 87/05

(45) Bekanntmachung des Hinweises auf die
Patenterteilung:
03.10.90 Patentblatt 90/40

(84) Benannte Vertragsstaaten:
AT BE CH DE FR GB IT LI NL SE

(56) Entgegenhaltungen:
EP-A-0 173 866
US-A-3 248 239
US-A-4 132 839

CHEMICAL ABSTRACTS, Band 90, Nr. 16, April
1979, Seite 91, Zusammenfassung Nr. 123242w,
Columbus, Ohio, US; & JP-A-78 139 639
(MIYOSHI OIL AND FAT CO., LTD) 06-12-1978

(73) Patentinhaber: BAYER AG
D-5090 Leverkusen 1 Bayerwerk (DE)

(72) Erfinder: Höhlein, Peter, Dr.
Windmühlenweg 3e
D-4152 Kempen 3 (DE)
Erfinder: Fehlbier, Alois
Heddinghofen 56
D-5093 Burscheid (DE)
Erfinder: Gruber, Hermann, Dr.
Paul-Klee-Strasse 87
D-5090 Leverkusen (DE)

Courier Press, Leamington Spa, England.

# EP 0 209 823 B1

**Beschreibung**

Die Erfindung betrifft die Verwendung von Ether- und Estergruppen aufweisenden Polyhydroxylverbindungen, die Veresterungsprodukte von Polyetherpolyolen mit Monocarbonsäuren darstellen, als Polyolkomponente bei der Herstellung von Zweikomponenten-Polyurethan-Beschichtungsmitteln oder -Vergußmassen.

Beschichtungsmittel und Vergußmassen, welche zu Polyurethanen ausreagierende Gemische als Bindemittel enthalten sind bekannt (vgl. z.B. Wagner Sarx, Lackkunstharze, 5. Auflage, Carl Hanser Verlag, München, 1971, Seite 153 bis 173 sowie Kunststoffhandbuch, Band 7, Hanser Verlag 1983, Seite 540 bis 561, bzw. Seiten 425—428).

Auf den Seiten 169 bis 170 der erstgenannten Veröffentlichung und auf den Seiten 556 bis 559 der zweitgenannten Veröffentlichung sind auch lösemittelfreie Systeme beschrieben, die es gestatten, beliebig dicke Beschichtungen in einem Arbeitsgang herzustellen. Die lösemittelfreien Beschichtungsmittel sind im Zusammenhang mit der stärkeren Beachtung der Umwelthygiene besonders interessant geworden. Zur Herstellung von lösemittelfreien Beschichtungen sind niedrigviskose Ausgangsstoffe erforderlich. Als Polyisocyanatkomponente werden im allgemeinen Polyisocyanatgemische der Diphenylmethanreihe (Gemische von 4,4'-Diisocyanatodiphenylmethan und gegebenenfalls 2,4'-Diisocyanatodiphenylmethan mit unterschiedlichen Mengen an höherfunktionellen Homologen, wie sie durch Phosgenierung von Anilin/Formaldehyd-Kondensaten zugänglich sind) verwendet. Schwierigkeiten treten dagegen bei der Auswahl der Polyol-Komponente auf. Die zur Verfügung stehenden hydroxylgruppenhaltigen Polyester-Polyole ergeben zwar nach der Vernetzung mit Polyisocyanaten ein gutes mechanisches Eigenschaftsniveau, haben aber deutliche Schwächen im Hinblick auf die Hydrolysenstabilität. Außerdem sind die hydroxylgruppenhaltigen Polyester-Polyole auf Grund der chemischen Konstitution hochviskos, was für die Herstellung lösemittelfreier Systeme ein Nachteil ist. Die bekannten hydroxylgruppenhaltigen Polyether-Polyole weisen oft eine ausreichend niedrige Viskosität auf und sind auch gegen hydrolytische Einflüsse beständig, führen jedoch zu Polyurethanen, die bezüglich ihrer mechanischen Eigenschaften den Polyesterurethanen deutlich unterlegen sind. Außerdem sind die bekannten Polyether-Polyole für die Umsetzung mit Polyisocyanaten in Beschichtungsmitteln wenig geeignet, da sie zur Blasenbildung neigen.

Zur Beseitigung der störenden Blasenbildung hat man verschiedene Vorschläge gemacht. Oftmals verwendet man in lösemittelfreien Polyurethan-Beschichtungen aktivierte Alkali-Alumosilikate mit Zeolithstruktur, die zur Bindung der störenden Feuchtigkeit dienen. Es handelt sich dabei um synthetisch hergestellte Alkali-Alumosilikate, wie sie als Molekularsiebe bekannt geworden sind. Trotz Mitverwendung von Molekularsieb—Zeolithen kommt es jedoch besonders bei der Verarbeitung unter hoher Luftfeuchtigkeit zu störender Schaumbildung, die bei Verwendung von reinen Polyether-Polyolen besonders ausgeprägt ist.

Es war daher die der Erfindung zugrundeliegende Aufgabe, neue lösungsmittelfreie oder -arme Zweikomponenten-Polyurethan-Systeme zur Verfügung zu stellen, die eine den Forderungen der Praxis entsprechende, niedrige Viskosität aufweisen, die mit keinen Verträglichkeitsproblemen der Reaktionspartner behaftet sind, und die sich als Bindemittel für Zweikomponenten-Polyurethan-Beschichtungsmittel oder -Vergußmassen eignen, welche sich ihrerseits zu blasenfreien Endprodukten mit guten mechanischen Eigenschaften verarbeiten lassen.

Diese Aufgabe konnte mit der nachstehend näher beschriebenen erfindungsgemäßen Verwendung von bestimmten Ether- und Estergruppen aufweisenden Polyhydroxylverbindungen als Polyolkomponente in derartigen Systemenen gelöst werden.

Gegen der Erfindung ist die Verwendung von Ether- und Estergruppen aufweisenden Polyhydroxylverbindungen einer (mittleren) Hydroxylfunktionalität von 2—6 und einer (mittleren) Hydroxylzahl von 100—600, die das Veresterungsprodukt von (i) Polyetherpolyolen einer (mittleren) Hydroxylfunktionalität von 3—8 und einer (mittleren) Hydroxylzahl von 200—1000 mit (ii) 5—70 Äquivalent-% an organischen Monocarbonsäuren darstellen, als Polyolkomponente oder Teil der Polyolkomponente in lösungsmittelfreien oder -armen Zweikomponenten-Polyurethan-Beschichtungsmitteln oder -Vergußmassen.

Die US—A—3 248 349 beschreibt zwar bereits (im Zusammenhang mit der Herstellung von Schaumstoffen) Ether- und Estergruppen aufweisende Polyhydroxylverbindungen, die zumindest teilweise den erfindungsgemäß zu verwendenden Polyhydroxylverbindungen entsprechen, jedoch vermittelt diese Vorveröffentlichung nicht den geringsten Hinweis auf die vorteilhafte erfindungsgemäße Verwendung dieser Verbindungen.

Unter "lösungsmittelarmen" Systemen sind im Rahmen der Erfindung solche Beschichtungsmittel bzw. Vergußmassen zu verstehen, deren Gehalt an Lösungsmitteln mit einem bei Normaldruck unter 150°C liegenden Siedepunkt bei maximal 5 Gew.-%, bezogen auf das Gewicht der Bindemittelkomponenten und des Lösungsmittels, liegt.

Der Umstand, daß die erfindungsgemäße Aufgabe mit den erfindungsgemäßen Polyhydroxylverbindungen gelöst werden kann, ist insofern überraschend, als der gewichtsmäßig größere Teil der erfindungsgemäßen Polyhydroxylverbindungen aus Polyethern besteht, die als empfindlich gegenüber Blasenbildung bekannt sind.

Ausgangsmaterialien (1) für die Herstellung der erfindungsgemäß zu verwendenden

2

EP 0 209 823 B1

Polyhydroxylverbindungen sind beliebige Polyetherpolyole bzw. Polyetherpolyolgemische einer (mittleren) Hydroxylfunktionalität von 3 bis 8, vorzugsweise von 3 bis 6 und einer (mittleren) Hydroxylzahl von 200 bis 1000, vorzugsweise 250 bis 800 mg KOH/g. Diese Polyetherpolyole können in an sich bekannter Weise durch Alkoxylierung geeigneter Startermoleküle oder geeigneter Gemische von Startermolekülen erhalten werden, wobei bei der Alkoxylierung insbesondere Propylenoxid und/oder Ethylenoxid gegebenenfalls im Gemisch und/oder nacheinander in beliebiger Reihenfolge zum Einsatz gelangen. Gwünschtenfalls können auch andere Alkylenoxide wie beispielsweise 1,2-Butylenoxid, 2,3-Butylenoxid oder Styroloxid bei der Herstellung der Polyetherpolyole (mit)verwendet werden. Geeignete Startermoleküle sind beispielsweise mindestens trifunktionelle Alkohole wie Glycerin, Trimethylolpropan, Pentaerythrit, Sorbit, Mannit, Saccharose, Lactose, Sorbitan, α-Methylglycosit, α-Hydroxyalkylglycosit bzw. deren Gemische oder deren Gemische mit difunktionellen Startermolekülen wie z.B. Wasser, Ethylenglykol, Propylenglykol, 1,4-Dihydroxybutan, Diethylenglykol oder Dipropylenglykol, wobei bei der Verwendung von Gemischen von Startermolekülen die genannte Bedingung bezüglich der Hydroxylfunktionalität beachtet werden sollte. Ein Polyetherpolyol mit einer mittleren Hydroxylfunktionalität im Bereich von 3,0 bis 4,8 kann z.B. durch Verwendung entsprechender Gemische aus Sorbit (Funktionalität=6) oder Sorbitan (Funktionalität=4) mit Ethylen- oder Propylenglykol oder Wasser (Funktionalität=2) hergestellt werden. Es ist jedoch keineswegs erforderlich, die Funktionalität der Komponente (i) durch Auswahl der bei der Alkoxylierung einzusetzenden Startermoleküle einzustellen, sondern es ist vielmehr auch möglich, separat hergestellte Polyetherpolyole unterschiedlicher Funktionalität und Hydroxylzahl so miteinander abzumischen, daß das Gemisch den obengenannten Bedingungen bezüglich Funktionalität und Hydroxylzahl entspricht. Es ist ferner möglich, bei der Herstellung der Polyetherpolyole bzw. der Einzelkomponenten des Polyetherpolyolgemischs als Startermoleküle Mono- oder Polyamine wie z.B. Ethylamin, Ethanolamin, Ethylendiamin oder Hexamethylendiamin zu verwenden bzw. mitzuverwenden, obwohl dies weniger bevorzugt ist.

Als Komponente (ii) können bei der Herstellung der erfindungsgemäß zu verwendenden Polyhydroxylverbindungen beliebige natürliche oder synthetische Monocarbonsäuren oder Gemische von Monocarbonsäuren verwendet werden. Die Monocarbonsäuren enthalten von 2 bis 30, vorzugsweise mindestens 10, insbesondere 10 bis 24 Kohlenstoffatome. Vorzugsweise werden aliphatische Monocarbonsäuren eingesetzt, besonders bevorzugt werden ungesättigte Fettsäuren mit einer Iodzahl von 10 bis 300 verwendet. Beispiele geeigneter Monocarbonsäuren sind Essigsäure, Buttersäure, n-Heptancarbonsäure, n-Nonancarbonsäure, n-Tridecancarbonsäure, Palmitinsäure, Stearinsäure, Benzoesäure, synthetische Fettsäuregemische mit 10 bis 18 Kohlenstoffatomen und insbesondere ungesättigte Fettsäuren wie Sojafettsäure, Erdnußölfettsäure, Saflorölfettsäure, Konjuvandolfettsäure, Ölsäure, Tallölfettsäure oder Gemische derartiger Carbonsäuren. Die Mitverwendung von geringen Mengen (bis zu 20 Äquivalent-%, bezogen auf die Carboxylgruppen) an mehrbasischen Carbonsäuren wie z.B. von Adipinsäure, Phthalsäure oder Terephthalsäure ist nicht grundsätzlich ausgeschlossen, jedoch keinesfalls bevorzugt, da die Mitverwendung derartiger mehrbasischer Säuren im allgemeinen zu einer unerwünschten Viskositätserhöhung führt. Die verwendeten Monocarbonsäuren weisen vorzugsweise keine Substituenten wie beispielsweise Hydroxylgruppen auf. Völlig ausgeschlossen ist die Verwendung von Estern von Hydroxycarbonsäuren, insbesondere von Rizinusöl anstelle der Monocarbonsäuren im Sinne einer Umesterungsreaktion.

Die Monocarbonsäuren werden bei der Herstellung der erfindungsgemäß zu verwendenden Polyhydroxylverbindungen in einer Menge von 5 bis 70, vorzugsweise 10 bis 65 Äquivalent-%, bezogen auf die Hydroxylgruppen der Komponente (i) einerseits und die Carboxylgruppen der Komponente (ii) andererseits, eingesetzt.

Die Durchführung der Veresterungsreaktion erfolgt in an sich bekannter Weise durch Erhitzen von Gemischen der Komponenten (i) und (ii) auf 180 bis 260°C, wobei gegebenenfalls an sich bekannte Veresterungskatalysatoren wie z.B. Dibutylzinndilaurat, Dibutylzinnoxid oder Tetraisopropyltitanat und gegebenenfalls an sich bekannte Hilfsmittel wie z.B. Schleppmittel für das entstehende Wasser mitverwendet werden. Die Veresterungsreaktion wird im allgemeinen unter Inertgas durchgeführt und solange aufrechterhalten, bis die Säurezahl des Reaktionsgemischs auf einen Wert von unter 5 mg KOH/g abgesunken ist. Bevorzugt werden die Reaktionspartner (i) und (ii) in Substanz miteinander zur Reaktion gebracht. Geeignete Veresterungs verfahren sind beispielsweise in folgenden Literaturstellen beschrieben:

1. Temple C. Pattan, Alkyd-Resin-Technology, Interscience Publishers John Wiley & Sons, New York, London 1962;

2. Dr. Johannes Scheiber, Chemie und Technologie der künstlichen Harze, Wissenschaftliche Verlagsgesellschaft mbH, Stuttgart, 1943;

3. Hans Wagner und Hans Friedrichs Sarx, Lackkunstharze, 4. Auflage, Carl Hanser Verlag München, 1959;

4. Ullmanns Enzyklopädie der technischen Chemie, Band 14, Seiten 80 bis 106, 1963.

Die so erhaltenen erfindungsgemäß zu verwendenden Polyhydroxylverbindungen weisen eine (mittlere) Hydroxylfunktionalität von 2 bis 6, vorzugsweise von 2 bis 4, eine (mittlere) Hydroxylzahl von 100 bis 600, vorzugsweise von 120 bis 400 und eine Säurezahl von unter 5 auf. Ihre Viskosität liegt im allgemeinen bei 250 bis 3500 mPa · s/20°C. Sie eignen sich hervorrangend als Polyolkomponente für lösungsmittelfreie oder -arme Zweikomponenten-Polyurethan-Systeme insbesondere

3

-Beschichtungsmittel oder -Vergußmassen.

Bei dieser erfindungsgemäßen Verwendung werden die Polyhydroxylverbindungen mit einer geeigneten Polyisocyanatkomponente zu dem Zweikomponenten-Polyurethan-Bindemittel kombiniert.

Für diesen Zweck kommen vorzugsweise bei Raumtemperatur flüssige organische Polyisocyanate in Betracht, wie beispielsweise flüssige Polyisocyanate auf Basis von Diisocyanatodiphenylmethan, d.h. flüssige Gemische von 4,4'-Diisocyanatodiphenylmethan mit 4,4'-Diisocyanatodiphenylmethan und gegebenenfalls 2,4'-Diisocyanatodiphenylmethan wie z.B. deren Umsetzungsprodukte mit unterschüssigen Mengen an mehrwertigen Alkoholen, insbesondere an Polypropylenglykolen mit einem Molekulargewicht bis zu 700 oder die carbodiimidmodifizierten Derivate dieser Diisocyanate, Tris-(isocyanatohexyl)-isocyanurat bzw. seine Gemische mit seinen höheren Homologen, Tris-(isocyanatohexyl)-biuret bzw. dessen Gemische mit seinen höheren Homologen oder flüssige niedermolekulare NCO-Prepolymere auf Basis von 2,4-Diisocyanatotoluol. Bevorzugt werden jedoch Polyisocyanat-Gemische der Diphenylmethanreihe, wie sie durch Phosgenierung von Anilinformaldehydkondensaten zugänglich sind, als Polyisocyanatkomponenten verwendet. Beliebige Gemische der beispielhaft genannten Polyisocyanate können selbstverständlich auch eingesetzt werden. Für thermisch härtbare Mischungen können Isocyanate auch in reversibel blockierter Form eingesetzt werden.

Zur Herstellung der Zweikomponenten-Bindemittel werden die erfindungsgemäß zu verwendenden Polyhydroxylverbindungen mit der Polyisocyanatkomponente vermischt, wobei die Reaktionspartner in Mengenverhältnissen eingesetzt werden, die einem Äquivalentverhältnis zwischen Isocyanatgruppen und gegenüber Isocyanatgruppen reaktionsfähigen Gruppen von 0,5:1 bis 2,5:1, vorzugsweise 0,8:1 bis 1,5:1, entsprechen. Durch geeignete Wahl des Äquivalentverhältnisses ist hierbei ebenso wie durch geeignete Wahl der genannten Ausgangskomponenten eine einfache Einstellung der mechanischen Eigenschaften der letztlich erhaltenen Flächengebilde mögliche.

Vor der genannten Durchmischung der einzelnen Komponenten können diesen die in der Polyurethanchemie an sich bekannten Hilfs- und Zusatzmittel zugesetzt werden. Wie bereits ausgeführt, können die so erhaltenen Zweikomponenten-Systeme sehr gut lösungsmittelfrei oder nur unter Mitverwendung geringer Lösungsmittelmengen (lösungsmittelarm) nach den bekannten Methoden zur Herstellung von Beschichtungen oder als Vergußmassen verarbeitet werden. Als gegebenenfalls in geringen Mengen mitzuverwendende Lösungsmittel kommen aromatische Lösungsmittel wie Toluol, Xylol, Solventnaphtha, Lösemittel vom Estertyp wie Ethylacetat, Butylacetat, sowie Ketone wie z.B. Methylisobutylketon und Cyclohexanon in Frage. Ferner können den Zweikomponenten-Systemen Katalysatoren zugesetzt werden, die eine Beschleunigung der Umsetzung der Isocyanatgruppen mit den aktiven Wasserstoffatomen des Veresterungsproduktes bewirken.

In Frage kommende Katalysatoren sind z.B. Dibutylzinndilaurat, Zinn-II-octoat oder Aminkatalysatoren wie z.B. Dimethylbenzylamin.

Weitere, bei der erfindungsgemäßen Verwendung gegebenenfalls mitzuverwendende Hilfs- und Zusatzmittel sind z.B. chlorierte Paraffine, Dioctylphthalat, Trioctylphosphat und Paraffinsulfonsäurephenylester. Zur Verarbeitung auf dem Gießharz- und Beschichtungssektor werden häufig Füllstoffe wie z.B. Kalziumcarbonat, Schwerspat, Quarzmehl, Holzmehl, Gummi und Korkmehl oder Verlaufmittel, Verdickungsmittel und Entlüftungsmittel zugegeben. Als farbgebende Komponente können organische Farbstoffe sowie anorganische Pigmente wie z.B. Titandioxid und Eisenoxidpigmente Verwendung finden. Die den Füllstoffen und Pigmenten anhaftende Feuchtigkeit kann durch vorhergehenden Trocknung oder durch die Mitverwendung von wasseraufnehmenden Stoffen wie z.B. den schon erwähnten Molekularsieb-Zeolithen entfernt werden.

Die Herstellung von Beschichtungen bzw. von Überzügen auf beliebigen Substraten stellt die bevorzugte erfindungsgemäße Verwendung dar, Hierbei kann die Verarbeitung der Beschichtungsmittel beispielsweise durch Gießen, Rakeln, Rollen, Streichen, Spritzen mittels Airless-Spritzmaschinen nach dem Heißspritzverfahren oder durch konventionelles Spritzen mittels üblicher Aggregate erfolgen. Die erfindungsgemäße Verwendung eignet sich zur Beschichtung beliebiger Substrate wie z.B. von Metallen, Beton, Asphalt oder Kunststoffen wie z.B. PVC, Polystyrol oder Polyurethan. Es lassen sich sowohl selbstverlaufende Fußbodenbeschichtungen als auch mit Quarzzusätzen hochgefüllte Industriebodenbeläge als auch säurefeste Auskleidungen von Beton- und Stahlbehältern herstellen. Die erfindungsgemäß zu verwendenden Zweikomponenten-Systeme eignen sich auch zur Herstellung von Umhüllungen oder von Innenauskleidungen von Strahlrohren und, als Vergußmassen, zur Herstellung von Kondensatoren im Formen- und Lehrenbau, wobei die erfindungsgemäß eröffnete Möglichkeit der Ausbildung einer ungestörten Oberfläche von besonderem Vorteil ist.

Beispiel 1

In einem mit Rührer, Heizung, Stickstoffeinleitungsrohr, Kolonne und Wasserabgang ausgestatteten 15 ltr.-Rührkessel werden 4853 g Sojaölfettsäure und 8459 g eines propoxylieteren GEmisches aus Sorbit und Propylenglykol (Mol-Verhältnis 2:1) mit einer Hydroxylzahl von 475 mg KOH/g Substanz und einem Äquivalentgewicht von 118 unter Durchleiten von 5—6 ltr. Stickstoff/Stunde eingewogen. Danach wird in cas. 3 Stunden auf 200°C aufgeheizt. Dabei darf die am Kopf der Kolonne gemessene Temperatur von 105°C nicht überschritten werden. Sobald die Sumpftemperatur von 200°C erreicht ist und die Kopftemperatur 90°C unterschreitet, wird zuerst die Kolonne entfernt und danach der Stickstoffstrom auf 30 Ltr./Stunde erhöht. Es wird solange kondensiert, bis eine Säurezahl von 1,4 mg KOH/g Substanz erreicht worden ist. Dann wird auf 100°C abgekühlt und das fertige Produkt über ein Gewebefilter filtriert. Es resultiert eine erfindungsgemäß verwendbare Polyhydroxylverbindung mit einer Jodfarbzahl von 5, einer Viskosität von 813 mPasec bei 20°C, einer OH-Zahl von 223 mg KOH/g Substanz und einer mittleren Hydroxylfunktionalität von 3,4.

Beispiel 2

Es wird wie im Beispiel 1 beschrieben verfahren. Zum Einsatz kommen 5259 g synthetische Fettsäure (Prifac® 7990, Molekulargewicht=300, Hersteller: Unichema) und 8556 g eines propoxylierten Gemisches aus Sorbit und Propylenglykol (Mol.-Verhältnis 2:1) mit einer OH-Zahl von 47. Nach der Umsetzung resultiert eine erfindungsgemäß verwendbare Polyhydroxylverbindung mit einer Viskosität von 1570 mPasec bei 20°C, einer Jodfarbzahl von 12, einer Säurezahl von 2,4, einer OH-Zahl von 234 und einer mittleren Hydroxylfunktionalität von 3,4.

Beispiel 3

Es wird wie im Beispiel 1 verfahren. Zum Einsatz kommen 5142 g Tallölfettsäure und 8682 g eines propoxylierten Gemisches aus Sorbit und Propylenglykol (Mol.-Verhältnis 2:1) mit einer OH-Zahl von 475. Nach der Umsetzung resultiert eine erfindungsgemäß verwendbare Polyhydroxylverbindung mit einer Viskosität von 1017 mPasec bei 20°C, einer Säurezahl von 2,4 mg KOH/g Substanz, einer Jodfarbzahl von 5, einer OH-Zahl von 231 mg KOH/g Substanz und einer mittleren Hydroxylfuntkionlität von 3,4.

Beispiel 4

Es wird wie in Beispiel 1 verfahren. Zum Einsatz kommen 6489 g Sojaölfettsäure und 7428 g eines propoxylierten Gemisches aus Sorbit und Propylenglykol (Mol.-Verhältnis 2:1) mit einer OH-Zahl von 475. Nach der Umsetzung resultiert eine erfindungsgemäß verwendbare Polyhydroxylverbindung mit einer Viskosität von 490 mPasec bei 20°C, einer Säurezahl von 1,8 mg KOH/g Substanz, einer Farbzahl von 5, einer OH-Zahl von 174 mg KOH/g Substanz und einer mittleren Hydroxylfunktionalität von 2,8.

Beispiel 5

Es wird wie in Beispiel 1 verfahren. Zum Einsatz kommen 5988 g Sojaölfettsäure und 7899 g eines propoxylierten Sorbits mit einer Viskosität von 49.300 mPasec bei 20°C und einer OH-Zahl von 411 mg KOH/g Substanz. Nach der Umsetzung resultiert eine erfindungsgemäß verwendbare Polyhydroxylverbindung mit einer Viskosität von 1035 mPasec, einer Säurezahl von 1,5 mg KOH/g Substanz, einer Jodfarbzahl von 3, einer OH-Zahl von 156 mg KOH/g Substanz und mit einer mittleren Hydroxylfunktionalität von 2,1.

Beispiel 6 (Verwendung)

Das Veresterungsprodukt aus Beispiel 1 wird in Kombination mit einem Polyisocyanatgemisch der Diphenylmethanreihe mit einem NCO-Gehalt von 31 Gew.-% und einer Viskosität bei 20°C von 130 mPa · s nach der nachstehend tabellarisch angegebenen Rezeptur als Beschichtungsmaterial in einer Schichtdicke von ca. 1 mm auf eine Glasplatte aufgebracht und mit zwei Beschichtungssystemen, in denen als Polyhydroxylverbindungen klassische Polyetherpolyole des Standes der Technik verwendet werden, verglichen. Im Vergleichsbeispiel 1 wird ein Gemisch (=Polyol I) aus gleichen Gewichtsteilen eines Propoxylierungsprodukts von Trimethylolpropan der OH-Zahl 336 und Polypropylenglykol der OH-Zahl 112 und im Vergleichsbeispiel 2 das Propoxylierungsprodukt eines Gemischs aus Propylenglykol und Sorbit der OH-Zahl 504 und der mittleren Hydroxylfunktionalität von 4,5 (=Polyol II) eingesetzt.

Die in der Tabelle angegebenen Vergleichsdaten machen deutlich, daß das erfindungsgemäße System gegenüber den Vergleichsbeispielen sowohl bezüglich der Vetträglichkeit als auch bezüglich der Oberflächenbeschaffenheit erhebliche Vorteile aufweist.

# EP 0 209 823 B1

## TABELLE (Menganangaben in Gewichtsteilen

| | | | |
|---|---|---|---|
| Vergleich 1 (Polyol I) | 100 | / | / |
| Vergleich 2 (Polyol II) | / | 100 | / |
| Beispiel 1 | / | / | 100 |
| Molekularsieb (Natrium-alumosilikat) | 10 | 10 | 10 |
| ®Bevaloid 6420[1] | 0,3 | 0,3 | 0,3 |
| DBTL, 10 %ig in Xylol[2] | 0,4 | / | / |
| Polyisocyanat | 62 | 118 | 62 |
| Vorreaktion (Min.) | 60 | 30 | keine |
| Verträglichkeit | etwas | fast | vollständig verträglich |
| Verarbeitungszeit (h) | 2 h | 50' | 2 h |
| Oberfläche | blasig | einige Blasen Krater | blasenfrei |
| Shore Härte A/D 1$^d$ 80°C | –/70 | –/84 | –/72 |
| 1$^d$RT | 52/– | –/84 | –/35 |

[1] handelsüblicher Entschäumer, Hersteller; Firma Chemical Manufacturers
[2] Dibutylzinndilaurat

## Patentanspruch

Verwendung von Ether- und Estergruppen aufweisenden Polyhydroxylverbindungen einer (mittleren) Hydroxylfunktionalität von 2—6 und einer (mittleren) Hydroxylzahl von 100—600, die das Veresterungsprodukt von (i) Polyetherpolyolen einer (mittleren) Hydroxylfunktionalität von 3—8 und einer (mittleren) Hydroxylzahl von 200—1000 mit (ii) 5—70 Äquivalent-% an organischen Monocarbonsäuren darstellen, als Polyolkomponente oder Teil der Polyolkomponente in lösungsmittelfreien oder -armen Zweikomponenten-Polyurethan-Beschichtungsmitteln oder -Vergußmassen.

## Revendication

Utilisation de composés polyhydroxylés, présentant des groupes éther et ester, ayant un nombre (moyen) de groupes hydroxyles fonctionnels de 2 à 6 et ayant un indice (moyen) d'hydroxyle de 100 à 600, qui représentent le produit d'estérification de (i) des polyétherpolyols ayant un nombre (moyen) de groupes hydroxyles fonctionnels de 3 à 8 et ayant un indice (moyen) d'hydroxyle de 200 à 1 000, avec (ii) 5 à 70 éq.% d'acides monocarboxyliques organiques, à titre de composant polyol ou d'une partie du composant polyol dans des produits d'enduction ou de revêtement ou dans des compositions à couler ou pour scellement, produits dépourvus de solvants ou pauvres en solvants, à deux composants générateurs de polyuréthannne.

## Claim

The use of polyhydroxyl compounds containing ether and ester groups and having an (average) hydroxyl functionality of 2 to 6 and an (average) hydroxyl value of 100 to 600, which represent the esterification product of (i) polyether polyols having an (average) hydroxyl functionality of 3—8 and an (average) hydroxyl value of 200—1000 with (ii) 5—70 equivalent-% or organic monocarboxylic acids, as polyol component of part of the polyol component in solventless or low-solvent two-component polyurethane coating or encapsulating compounds.